Europäisches Patentamt

European Patent Office

Office européen des brevets

(19)

(11) **EP 1 254 542 B1**

(12) **EUROPEAN PATENT SPECIFICATION**

(45) Date of publication and mention
of the grant of the patent:
**14.04.2004 Bulletin 2004/16**

(51) Int Cl.$^7$: **H04L 25/03**

(21) Application number: **01988982.3**

(86) International application number:
**PCT/EP2001/011966**

(22) Date of filing: **12.10.2001**

(87) International publication number:
**WO 2002/035728 (02.05.2002 Gazette 2002/18)**

(54) **A METHOD OF RECEIVING A SIGNAL AND A RECEIVER**

ZWEI LERNFOLGEN VERWENDENDE ENTZERRUNG

PROCEDE POUR RECEVOIR UN SIGNAL ET RECEPTEUR CORRESPONDANT

(84) Designated Contracting States:
**AT BE CH CY DE DK ES FI FR GB GR IE IT LI LU
MC NL PT SE TR**

(30) Priority: **26.10.2000 GB 0026206**

(43) Date of publication of application:
**06.11.2002 Bulletin 2002/45**

(73) Proprietor: **Koninklijke Philips Electronics N.V.
5621 BA Eindhoven (NL)**

(72) Inventor: **LAGARRIGUE, Frederic
NL-5656 AA Eindhoven (NL)**

(74) Representative: **White, Andrew G.
Philips Intellectual Property & Standards,
Cross Oak Lane
Redhill, Surrey RH1 5HA (GB)**

(56) References cited:
WO-A-00/28691          US-A- 5 226 060
US-A- 5 257 286          US-A- 5 917 855

• XIANG YANG GAO, SNELGROVE: "Adaptive
linearization schemes for weakly nonlinear
systems using adaptive linear and nonlinear FIR
filters" MIDWEST SYMPOSIUM ON CIRCUITS
AND SYSTEMS, 12 - 14 August 1990, pages 9-12,
XP010047763 New York, US

EP 1 254 542 B1

## Description

Technical Field

The present invention relates to receiving a signal propagated over a signal channel and to a receiver. The present invention has particular, but not exclusive, application to signals propagated over a radio signal channel. Such signals may conform to a TDMA protocol such as is used in the DECT (Digitally Enhanced Cordless Telephone) standard.

Background Art

It is well known that radio signals transmitted to a receiver in a mobile telephone environment are subject to distortion as a result of intersymbol interference (ISI) as a consequence of multipath effects. In order to mitigate the effects of ISI, it is known in the communications field to equalise a received signal. In its simplest form an equaliser is a digital transversal filter whose coefficients are determined to counter the effects of channel distortion and restore the recovered waveform prior to it being sliced to provide a binary output. A training sequence is used in determining the contemporaneous filter coefficients. The training sequence is included in a signal to be transmitted and also is stored in a ROM at the receiver. The version of the training sequence recovered from a received signal is compared with that stored in the ROM and the coefficients of the transversal filter are adjusted to minimise the difference between distorted training sequence and the prestored version. Other types of equalisers are decision feedback equalisers and Viterbi equalisers.

For a baseband equalisation process, a training sequence generally consists of a known sequence of symbols or bits. When the impulse response of a signal channel is short compared to the symbol length, the binary bit stream itself is not sufficient to acquire the critical information relating to ISI. This problem of the short impulse response is overcome to a degree by operating fractionally-spaced equalisers on a received signal which is sampled at a frequency higher than the symbol rate. The pre-stored training sequence is over-sampled taking into account the shape of the received data.

ISI is not the only source of distortion in a radio link which includes the transmitter, the radio channel and the receiver. The frequency modulation process in the transmitter and the frequency demodulation process in the receiver can introduce non-linear distortions. Additional sources of non-linear distortions comprise filters and limiters. Such non-linear effects cannot be properly estimated by an equaliser whose primary objective is to eliminate distortion due to ISI. Additionally, if the training sequence does not take these non-linear distortions into consideration, the convergence of the equaliser can be unreliable and may lead to the received signal being distorted more after equalisation than before equalisation.

United States Patent Specification 5,917,855 discloses a method of, and apparatus for, detecting an original signal which has been stored in a data storage device, such as magnetic, optical or magnetic-optical. In the course of recording an original data signal it becomes distorted due to the recording channel having a non-linear characteristic. When the signals are reproduced it is proposed to equalise the interference between symbols and the non-linear distortion present in the signals reproduced from the storage device. An adaptive partial response equaliser, such as the Viterbi algorithm called the differential partial response class-IV (PR-IV) Viterbi algorithm, is preferred. However a problem with this algorithm is said to be that intersymbol interference (ISI) cannot be removed completely. The solution disclosed in the cited specification is pre-equalising the reproduced signal into a signal suitable for use with the PR-IV Viterbi algorithm. The pre-equalisation is intended to remove leading undershoot whilst the PR-IV Viterbi algorithm is intended to remove trailing undershoot. In order to train the coefficients used in the pre-equaliser and the PR-IV Viterbi algorithm the same training sequence is operated on. In the first instance the training sequence is applied to a non-linear least mean square adaptor which includes a non-linear adder, a reference signal generator, error detector and a coefficient adaptor which supplies the tap values to the pre-equaliser. In the second instance the same training sequence is supplied to a non-linear effective channel estimator which uses a least mean squares method for measuring the remaining linear and non-linear ISI. Essentially the cited solution attempts to removes the effects of ISI only in a reproduced signal in two equalising stages, one for the leading undershoot (or pre-cursive ISI) and the other for the trailing undershoot (or post cursive ISI). There is no consideration given to reducing distortion occurring in the entire transmission path which includes the transmitter and the receiver together with the radio channel.

United States Patent Specification 5,226,060 discloses a modem with non-linear equalisation of a base band signal. A digitised base band signal is applied in parallel to two linear adaptive equalisation paths. In a first of the two paths a sample is equalised and the output is applied to one input of a summation stage. In the second of the two equalisation paths the same sample is applied to a non-linear generator which provides a result including the third harmonic of the sample in the first of the paths. This result is equalised and applied to a second input of the summation stage. The composite signal is applied to a data recovery circuit which typically stores a constellation comprising a set of points in a complex plane, each of which points corresponds to a digital code, and the data recovery circuit determines the point on the constellation that is closest to the composite equalised result. An error circuit subtracts the output of the data recovery circuit from the composite signal on its input and the error or difference signal is applied to a circuit for updating the tap weights in such a manner as to minimise the average squared magnitude of the error signal. In the cited circuit the parallel equalisation paths substantially simultaneously compensate for non-linear distortion in a signal channel as well as for harmonic and/or intermodulation distortion.

Specification WO 00/28691 discloses a multi-pair gigabit Ethernet transceiver. ISI compensation is partitioned into two stages: a first stage compensates ISI components induced by characteristics of a transmitter's partial response pulse shaping filter in a demodulator and a second stage compensates ISI components induced by characteristics of a multi-pair transmission channel in a Viterbi decoder. During the initial start-up, ISI impairments are processed in independent portions of electronic circuitry, with ISI caused by a partial response pulse shaping filter being compensated in an inverse partial response filter in a feedforward equaliser, and ISI caused by transmission channel characteristics compensated by a decision feedback equaliser operating in conjunction with a multiple decision feedback equaliser stage to provide ISI pre-compensated signals to a decoder stage for symbolic decoding. By performing computations necessary for ISI cancellation in respective branches allows for fast DFE convergence as well as assists a transceiver in achieving fast acquisition in a robust and reliable manner. After start-up all ISI is compensated for by the combination of the decision feedback equaliser and the multiple decision feedback equaliser.

Disclosure of Invention

It is an object of the present invention to equalise a received signal more effectively.

According to a first aspect of the present invention there is provided a method of receiving and recovering data in a radio signal which comprises data propagated over a radio link including a radio channel and transmitting and receiving equipments, the method comprising receiving the radio signal, converting the radio signal to a base band signal, demodulating the base band signal, equalising the base band signal to reduce distortion and recovering the data from the equalised signal, characterised in that in order to reduce one type of distortion due to interference occurring in the radio channel and another type of distortion introduced by the transmitting and receiving equipments, a first equalisation process is carried out on the base band signal in a first equaliser whose filter coefficients are determined using a first training sequence designed to include distortion introduced by the transmitting and receiving equipments, the first training sequence being derived by measuring a predetermined sequence in transmission conditions of no intersymbol interference and a high signal-to-noise ratio, and the signal derived from the first equalisation process is subjected to a second equalisation process in a second equaliser whose filter coefficients are determined using a second training sequence designed to include distortion by the radio channel.

According to a second aspect of the present invention there is provided apparatus for receiving and recovering data in a radio signal which comprises data propagated by a transmitter over a radio channel, the receiver comprising means for receiving the radio signal, means for converting the radio signal to a base band signal, demodulating means for demodulating the base band signal, equalising means for equalising the base band signal to reduce distortion and means for recovering the data from the equalised signal, characterised in that the equalising means comprises a first equaliser coupled to an output of the demodulating means for reducing one type of distortion due to intersymbol interference occurring in the radio channel, the first equaliser including means for providing a first training sequence designed to take into consideration the distortion introduced by the transmitting and receiving equipments and for supplying the first training sequence to the first equaliser for determining values of its filter coefficients, said means comprising measuring means for measuring a predetermined sequence received in transmission conditions of no intersymbol interference and a high signal-to-noise ratio, and a second equaliser for reducing another type of distortion introduced by a transmitter and a receiver, the second equaliser having an input coupled to an output of the first equaliser, an output coupled to the means for recovering the data, and including means for providing a second training sequence chosen to reduce the other type of distortion and for supplying the second training sequence to means for determining values of its filter coefficients.

In an implementation of the method in accordance with the present invention the first operation endeavours to counter the effects of distortion, such as ISI, introduced by the radio channel, and the second operation endeavours to counter non-linear distortions introduced by the transmitting and receiving equipments forming part of the radio link. In the first operation a training sequence which includes the non-linear characteristics present in the transmitting and receiving equipment is used and in the second operation a training sequence is used which excludes the non-linear characteristics present in the transmitting and receiving equipment.

Since the signal channel between a couple consisting of a receiver and a transmitter is likely to be different than that between another couple consisting of the receiver and another transmitter, the receiver may store several training sequences, rather than one, and have means for selecting an optimum one of the training sequences to match the current couple.

By the method in accordance with the present invention, the receiver performance is enhanced firstly because each source of distortion is addressed independently and thus can be removed to a greater extent, and secondly the risk of divergence (as opposed to convergence) of a single, all in one process is reduced.

Brief Description of Drawings

The present invention will now be described, by way of example, with reference to the accompanying drawings, wherein:

> Figure 1 is a block schematic diagram of a radio system,
> Figure 2 is a block schematic diagram of a radio receiver used in the radio system.
> Figure 3 is a block schematic diagram of a linear transversal equaliser suitable for use in the radio receiver shown in Figure 2,
> Figure 4 illustrates in broken lines a theoretical training sequence and in a continuous trace a measured training sequence, and
> Figure 5 shows the effects of a two-stage equalisation on the baseband waveforms of the preamble and synchronisation code word of a typical DECT slot.

In the drawings the same reference numerals have been used to indicate corresponding features.

Modes for Carrying Out the Invention

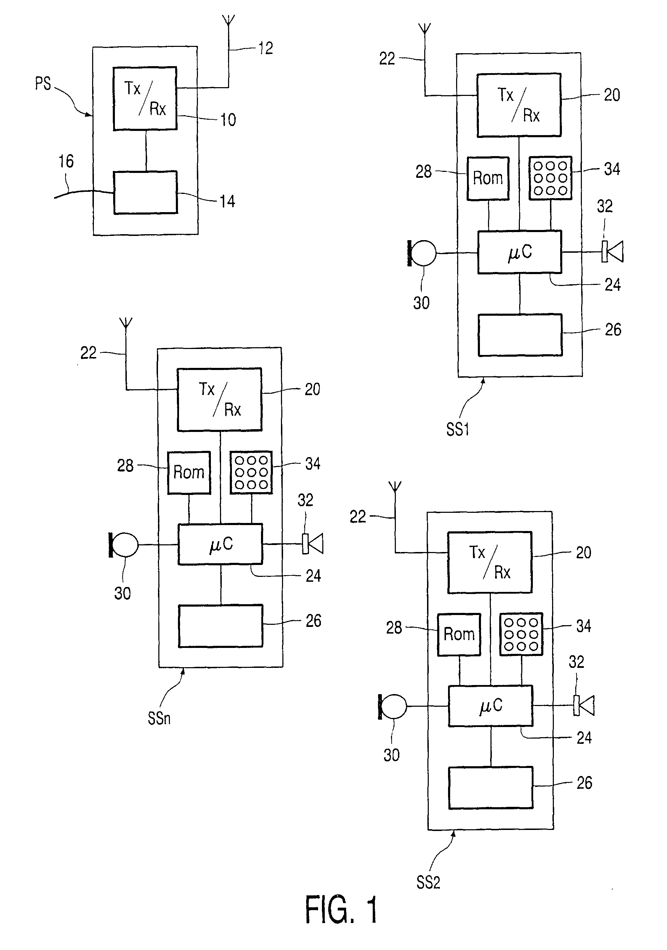

The system shown in Figure 1 comprises a primary station PS including a transceiver 10 coupled to an antenna 12 and to a controller 14 which controls the operation of the primary station. A PSTN line 16 is coupled to the controller 14 and provides a means for the primary station to communicate outside the cordless phone system of which the primary station is a part.

A plurality of cordless secondary stations SS1, SS2, SSn are able to roam relative to the primary station. Each of the secondary stations SS1, SS2, SSn is essentially the same and comprises a transceiver 20 connected to an antenna 22 and to a microcontroller 24 which controls the operation of the secondary station in accordance with software stored in a program memory 26. Data, such as training sequences for use in equalising operations, is stored in a ROM 28. A microphone 30, a loudspeaker 32 and a keypad 34 are also coupled to the microcontroller 24.

In the case of the system operating in accordance with the DECT protocol, the system is a FDMA/TDMA one having ten frequency channels, each of which comprises twelve duplex voice channels. A secondary station wishing to make a call, listens to all the available channels and selects the best channel on which to make a call. A call may comprise digitised speech or data.

Transmissions from one station to another are likely to be subject to multipath effects which will cause intersymbol interference (ISI) at the receiving station. Also non-linearities in the modulation and demodulation of the signals will cause additional distortion of the signals received by the receiving station.

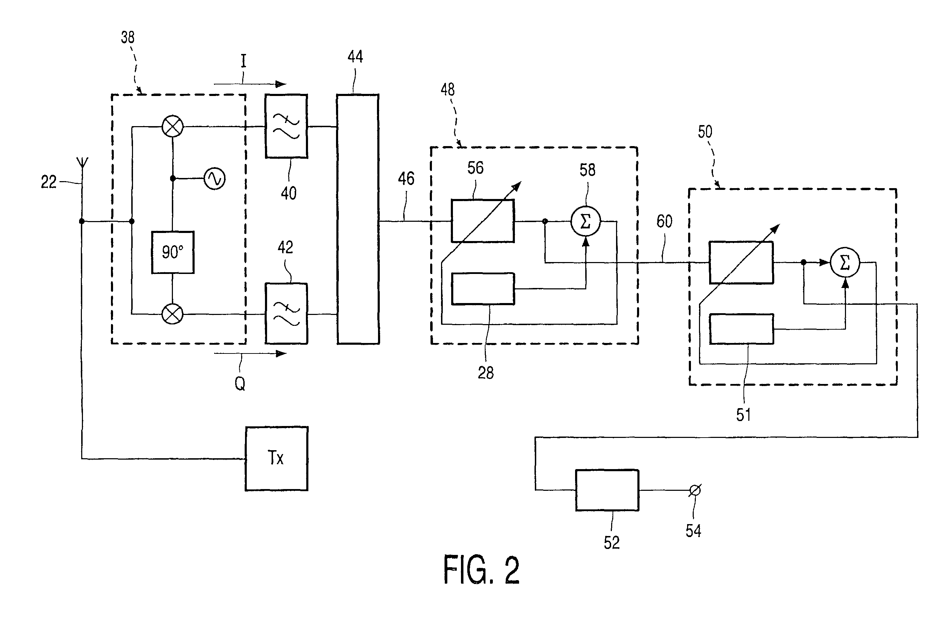

In accordance with the method of the present invention, each type of distortion is countered independently of the other (or others). A suitable transceiver architecture is shown in Figure 2. The receiving part will be described in greater detail because it is relevant to the method in accordance with the present invention but the transmitter will not be described.

The antenna 22 is coupled to a zero or low IF quadrature frequency down conversion stage 38 which provides I and Q outputs to respective low pass filters 40, 42 which pass the wanted baseband components. A demodulator 44 demodulates the signal and provides a data signal on its output 46. A first equaliser 48 counters the distortion due to ISI in the data signal and a second equaliser 50 counters the non-linear effects in the modulation and demodulation of the data signal to produce a waveform which is supplied to a bit slicer 52 which produces the digital data/digitised speech on its output 54.

Each of the first and second equalisers 48, 50 can be of the same construction. For convenience of description, the first equaliser 48 will be described in greater detail. The first equaliser comprises a FIR filter 56 having an input for receiving a signal from a previous stage, in this instance the demodulator 44, and an output coupled to a summing stage 58 and to an output terminal 60. The ROM 28 storing the training sequence (s) is coupled to the summing stage 58. An output of the summing stage 58 is used to adjust the coefficients of the FIR filter 56.

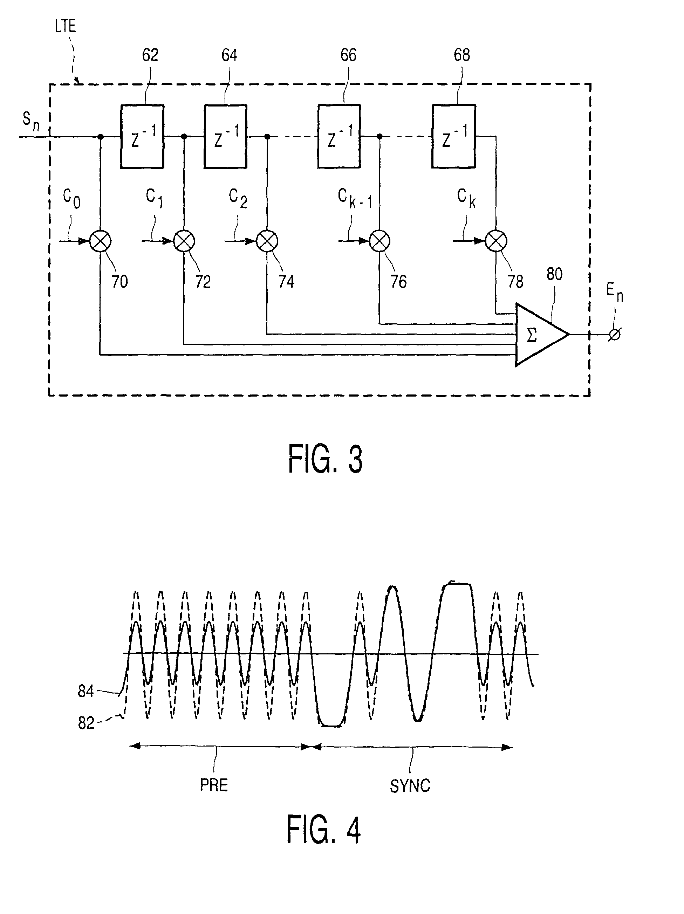

Figure 3 shows a first equalisation stage formed by a linear, fractionally - spaced equaliser, such as a linear transversal equaliser LTE which comprises a plurality of series connected time delay stages 62, 64, 66 and 68 each having a time delay $z^{-1}$. The input $S_n$ to the first delay stage 62 and outputs of all the delay stages 62 to 68 are coupled to respective multipliers 70 to 78 to which respective filter coefficients $c_o$ to $c_k$ are applied. Outputs from the multipliers 70 to 78 are combined in a summing stage 80 to provide an output signal $E_n$. This output signal can simply be written as:

$$E_n = \sum_i c_i . S_{n-1}$$

where $S_n$ is the sampled base band signal, and $c_k$ represents the equaliser coefficients or taps.

The values of the respective coefficients $c_o$ to $c_k$ are determined to compensate for the distortion to the signal during its transmission. A training sequence is used to this process.

In accordance with the method of the present invention the training sequence which includes the non-linear aspects of the transmission link is chosen. Thus the equaliser attempts to compensate only for distortions occurring within the radio channel, including ISI, and the risk of bad convergence is reduced compared to a typical Gaussian - shaped sequence.

Instead of trying to model the non-linear effects with a pulse - shaping filter, the optimum training sequence can be obtained from a measurement of a desired sequence received in ideal transmission conditions, that is no ISI and high Signal-to-Noise Ratio (SNR), using a wired connection for example. The measured signal can then be digitised depending on the equalisation requirements, that is, sampling frequency and number of bits of definition, and the result can be stored in a memory. In the case of DECT, the synchronisation word present in the S - field of every transmitted packet can be used as the training sequence.

Figure 4 shows two versions of the S field comprising preamble PRE and synchronisation code word SYNC. The trace 82 shown in broken lines shows the result of shaping by the Gaussian filter only, while the continuous trace 84 is an example of a measurement to be used as the chosen training-sequence. This particular example was measured at the output of the demodulator of a DECT base station, in ideal transmission conditions. The main difference between the waveforms 82, 84 comes from the IF filter used at the receiver. More particularly the continuous trace 84 includes all the non-linear phenomena present in the transmitter and the receiver. The waveform 84 is therefore digitised to build-up a training sequence for a DECT fractionally - spaced equalisation.

A second stage of equalisation, that is the stage 50 (Figure 2), is used to compensate for the intrinsic non-linearities of the radio link. This second stage may take one of several forms, for example (1) a decision feedback equaliser with an adaptive algorithm, such a RLS/LMS, using a training sequence, (2) an MSLE equaliser (Maximum - Likelihood Sequence Estimation) based on the Viterbi algorithm, or (3) a simple transversal equaliser identical to the first stage 48 (Figure 2) and comprising a ROM 51 storing a training sequence. The simple transversal equaliser may have a limited performance in removing non-linear effects but has the advantage of being simpler.

The choice of the training sequence must be such as not to include the non-linearities which it is required to compensate for. A Gaussian - shaped training sequence such as is shown by the broken line trace 82 (Figure 4) would be appropriate. In the case of DECT, there is some flexibility in defining the shape of the Gaussian filter. The parameter BT which defines the bandwidth of this filter can typically vary from 0.3 to 0.7.

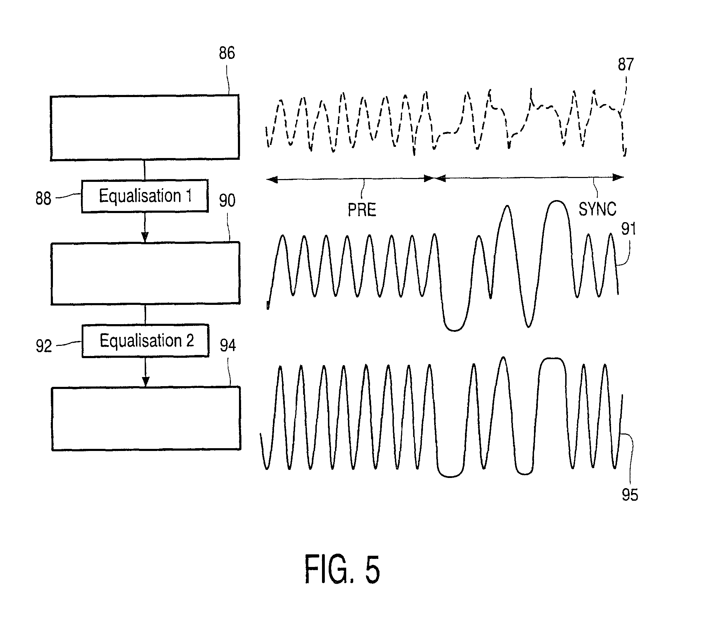

Figure 5 summarises the 2 stage equalisation process in accordance with the present invention by showing the base band waveforms of the preamble PRE and the synchronisation code word SYNC. The rectangle 86 and its associated trace 87 represent the distorted waveform due to perturbations from the radio channel. The rectangle 88 represents the first equalisation stage using the measured training sequence. The rectangle 90 and its associated trace 91 represent the waveform still containing the intrinsic non-linearities of the radio link. The rectangle 92 represents the second equalisation stage using say a Gaussian filter. The rectangular 94 and its associated trace 95 represent the original waveform retrieved for an optimum performance.

Since each transceiver architecture implies its own set of non-linear effects, then there is only one ideal training sequence per couple of a transmitter/a receiver. In order to improve the equalisation process, several training sequences could be stored instead of one sequence. These training sequences would be obtained from measurements of the desired waveform made for different transmitter/receiver couples.

The first few slots of a transmission could be used to select the optimum training sequence, that is, the one that matches the current transmitter/receiver couple. This could be done for example by autocorrelation. Then, the following time slots could use the selected training sequence to perform the first equalisation process.

A similar approach may be used for the second equalisation process and in this instance a table of different waveforms corresponding to different BT factors could be stored. Like the first equalisation stage the optimum training sequence can be selected in the first few slots of a transmission and subsequent slots used for performing equalisation with the selected training sequence.

In the present specification and claims the word "a" or "an" preceding an element does not exclude the presence of a plurality of such elements. Further, the word "comprising" does not exclude the presence of other elements or steps than those listed.

From reading the present disclosure, other modifications will be apparent to persons skilled in the art. Such modifications may involve other features which are already known in the design, manufacture and use of cordless and cellular systems and component parts therefor and which may be used instead of or in addition to features already described herein.

Industrial Applicability

Communications equipment

**Claims**

1. A method of receiving and recovering data from a radio signal, which comprises data propagated over a radio link, said radio link including including a radio channel and transmitting and receiving equipments, the method comprising receiving (86) the radio signal, converting (86) the radio signal to a base band signal, demodulating (86) the base band signal, equalising (88, 92) the base band signal to reduce distortion, and recovering the data from the equalised signal, **characterised in that**, in order to reduce one type of distortion, due to interference occurring in the radio channel, and another type of distortion, introduced by the transmitting and receiving equipments, a first equalisation process (88) is carried out on the base band signal in a first equaliser whose filter coefficients are determined using a first training sequence, the first training sequence being derived by measuring a predetermined sequence in transmission conditions of no intersymbol interference and a high signal-to-noise ratio, and the signal derived from the first equalisation process is subjected to a second equalisation process (92) in a second equaliser whose filter coefficients are determined using a second training sequence, which has not passed through the non-linearities of said transmitting and receiving equipments.

2. A method as claimed in claim 1, **characterised by** storing a plurality of first training sequences relating to the receiving equipment being used with different transmitting equipments, and by selecting from the stored first training sequences the training sequence relating to a currently used transmitting equipment.

3. Apparatus for receiving and recovering data from a radio signal, which comprises data propagated by a transmitter over a radio channel, the receiver comprising means (22) for receiving the radio signal, means (38) for converting the radio signal to a base band signal, demodulating means (44) for demodulating the base band signal, equalising means (48, 50) for equalising the base band signal to reduce distortion, and means for recovering the data from the equalised signal, **characterised in that** the equalising means comprises a first equaliser (48) coupled to an output of the demodulating means (44), for reducing one type of distortion due to intersymbol interference occurring in the radio channel, the first equaliser including means (28) for providing a first training sequence and for supplying the first training sequence to the first equaliser for determining values of its filter coefficients, said means (28) comprising measuring means for measuring a predetermined sequence received in transmission conditions of no intersymbol interference and a high signal-to-noise ratio, and a second equaliser (50) for reducing another type of distortion introduced by a transmitter and a receiver, the second equaliser having an input coupled to an output (60) of the first equaliser, an output coupled to the means for recovering the data, and including means (51) for providing a second training sequence, which has not passed through the non-linearities of said transmitter and receiver, and for supplying the second training sequence to means for determining values of its filter coefficients.

4. An apparatus as claimed in claim 3, **characterised by** means for storing a plurality of first training sequences relating to the receiving equipment being used with different transmitting equipments, and means for selecting from the stored first training sequences the training sequence relating to a currently used transmitting equipment.

**Patentansprüche**

1. Verfahren zum Empfangen und Rückgewinnen von Daten aus einem Funksignal, das Daten umfasst, die über eine Funkverbindung verbreitet werden, welche einen Funkkanal und Sende- und Empfangsvorrichtungen enthält, wobei das Verfahren den Empfang (86) des Funksignals, die Umwandlung (86) des Funksignals in ein Basisbandsignal, die Demodulation (86) des Basisbandsignals, die Entzerrung (88, 92) des Basisbandsignals zur Reduzierung von Verzerrungen und die Rückgewinnung der Daten aus dem entzerrten Signal umfasst, **dadurch gekennzeichnet, dass** zur Reduzierung einer durch die im Funkkanal auftretenden Interferenz verursachten Verzerrungsart und einer anderen durch die Sende- und Empfangsvorrichtungen verursachten Verzerrungsart ein erster Entzerrungsvorgang (88) für das Basisbandsignal in einem ersten Entzerrer ausgeführt wird, dessen Filterkoeffizienten mit Hilfe einer ersten Trainingssequenz bestimmt werden, wobei die erste Trainingssequenz durch Messung einer vorgegebenen Sequenz unter Übertragungsbedingungen ohne Intersymbolinterferenz und mit einem hohen Rauschabstand abgeleitet wird, und wobei das von dem ersten Entzerrungsvorgang abgeleitete Signal einem zweiten Entzerrungsvorgang (92) in einem zweiten Entzerrer unterzogen wird, dessen Filterkoeffizienten mit Hilfe einer zweiten Trainingssequenz bestimmt werden, die die Nichtlinearitäten der genannten Sende- und Empfangsvorrichtungen nicht durchlaufen hat.

2. Verfahren nach Anspruch 1, **dadurch gekennzeichnet, dass** eine Vielzahl erster Trainingssequenzen gespeichert werden, die zu der mit verschiedenen Sendevorrichtungen benutzten Empfangsvorrichtung gehören, und dass aus den gespeicherten ersten Trainingssequenzen die zu einer aktuell benutzten Sendevorrichtung gehörende Trainingssequenz ausgewählt wird.

3. Gerät für den Empfang und die Rückgewinnung von Daten aus einem Funksignal, das von einem Sender über einen Funkkanal verbreitete Daten umfasst, wobei der Empfänger Mittel (22) zum Empfangen des Funksignals, Mittel (38) zum Umwandeln des Funksignals in ein Basisbandsignal, Demodulationsmittel (44) zum Demodulieren des Basisbandsignals, Entzerrungsmittel (48, 50) zum Entzerren des Basisbandsignals, um Verzerrungen zu reduzieren, und Mittel zum Rückgewinnen der Daten aus dem entzerrten Signal umfasst, **dadurch gekennzeichnet, dass** das Entzerrungsmittel einen ersten Entzerrer (48) umfasst, der mit einem Ausgang des Demodulationsmittels (44) gekoppelt ist, um eine durch die im Funkkanal auftretende Intersymbolinterferenz verursachte Verzerrungsart zu reduzieren, wobei der erste Entzerrer Mittel (28) zur Schaffung einer ersten Trainingssequenz und zur Weiterleitung der ersten Trainingssequenz an den ersten Entzerrer zwecks Bestimmung der Werte seiner Filterkoeffizienten enthält, wobei das genannte Mittel (28) Messungsmittel zur Messung einer vorgegebenen, unter Übertragungsbedingungen empfangenen Sequenz ohne Intersymbolinterferenz und mit einem hohen Rauschabstand umfasst, und einen zweiten Entzerrer (50) zur Reduzierung einer anderen durch einen Sender und einen Empfänger verursachten Verzerrungsart, wobei der zweite Entzerrer einen mit einem Ausgang (60) des ersten Entzerrers gekoppelten Eingang und einen mit den Datenrückgewinnungsmitteln gekoppelten Ausgang hat sowie Mittel (51) beinhaltet, um eine zweite Trainingssequenz zu liefern, die die Nichtlinearitäten des genannten Senders und Empfängers nicht durchlaufen hat, und um die zweite Trainingssequenz Mitteln zur Bestimmung der Werte seiner Filterkoeffizienten zuzuführen

4. Gerät nach Anspruch 3, **dadurch gekennzeichnet, dass** Mittel zur Speicherung einer Vielzahl erster Trainingssequenzen vorhanden sind, die zu der mit verschiedenen Sendevorrichtungen benutzten Empfangsvorrichtung gehören, sowie Mittel, um aus den gespeicherten ersten Trainingssequenzen die zu einer aktuell benutzten Sendevorrichtung gehörende Trainingssequenz auszuwählen.

**Revendications**

1. Procédé pour recevoir et récupérer des données dans un signal radio qui contient des données propagées sur une liaison radio, ladite liaison radio comprenant un canal radio ainsi que du matériel d'émission et du matériel de réception, le procédé comprenant la réception (86) du signal radio, la conversion (86) du signal radio en un signal en bande de base, la démodulation (86) du signal en bande de base, l'égalisation (88, 92) du signal en bande de base pour réduire ladistorsion, et la récupération des données à partir du signal égalisé, **caractérisé en ce qu'**afin de réduire un type de distorsion, lié aux perturbations se produisant dans le canal radio, et un autre type de distorsion, introduit par le matériel d'émission et le matériel de réception, un premier processus d'égalisation (88) est exécuté sur le signal en bande de base dans un premier égaliseur dont les coefficients de filtre sont déterminés en utilisant une première séquence d'apprentissage, la première séquence d'apprentissage étant dérivée en mesurant une séquence prédéterminée dans des conditions de transmission sans perturbations entre symboles et avec un rapport signal/bruit élevé, et **en ce que** le signal dérivé du premier processus d'égalisation est soumis à un second processus d'égalisation (92) dans un second égaliseur dont les coefficients de filtre sont déterminés en utilisant une seconde séquence d'apprentissage, laquelle n'est pas passée par les non-linéarités dudit matériel de démission et dudit matériel de réception.

2. Procédé suivant la revendication 1, **caractérisé par** le stockage d'une pluralité de premières séquences d'apprentissage liées au matériel de réception utilisé avec différents matériels d'émission, et par la sélection parmi les premières séquences d'apprentissage stockées de la séquence d'apprentissage liée à un matériel d'émission utilisé actuellement.

3. Appareil pour recevoir et récupérer des données dans un signal radio qui contient des données propagées par un émetteur sur un canal radio, le récepteur comprenant un moyen (22) pour la réception du signal radio, un moyen (38) pour la conversion du signal radio en un signal en bande de base, un moyen de démodulation (44) pour la démodulation du signal en bande de base, un moyen d'égalisation (48, 50) pour l'égalisation du signal en bande de base pour réduire ladistorsion, et un moyen pour la récupération des données à partir du signal égalisé, **caractérisé en ce que** le moyen d'égalisation comprend un premier égaliseur (48) relié à une sortie du moyen de démodulation (44), pour réduire un type de distorsion lié aux perturbations entre symboles se produisant dans le canal radio, le premier égaliseur comprenant un moyen (28) pour fournir une première séquence d'apprentissage et pour fournir la première séquence d'apprentissage au premier égaliseur afin de déterminer des valeurs de ses coefficients de filtre, ledit moyen (28) comprenant un moyen de mesure pour mesurer une séquence prédéterminée reçue dans des conditions de transmission sans perturbations entre symboles et avec un rapport signal/bruit élevé, et un second égaliseur (50) pour réduire un autre type de distorsion introduit par un émetteur et un récepteur, le second égaliseur présentant une entrée reliée à une sortie (60) du premier égaliseur, une sortie reliée au moyen pour récupérer les données, et comprenant un moyen (51) pour fournir une seconde séquence d'apprentissage, laquelle n'est pas passée par les non-linéarités desdits émetteur et récepteur, et pour fournir la seconde séquence d'apprentissage à un moyen pour déterminer des valeurs de ses coefficients de filtre.

4. Appareil suivant la revendication 3, **caractérisé par** un moyen pour le stockage d'une pluralité de premières séquences d'apprentissage liées au matériel de réception utilisé avec différents matériels d'émission, et un moyen pour la sélection parmi les premières séquences d'apprentissage stockées de la séquence d'apprentissage liée à un matériel d'émission utilisé actuellement.

FIG. 1

FIG. 2

FIG. 3

FIG. 4

FIG. 5